# EUROPÄISCHE PATENTANMELDUNG

(11) **EP 0 531 553 A1**
(43) Veröffentlichungstag der Anmeldung: **17.03.1993**
(21) Anmeldenummer: 91115038.1
(22) Anmeldetag: 06.09.1991
(51) Int. Cl.: G01N 1/14

(54) **Probenentnahmevorrichtung**

(71) Anmelder: SCHUF ARMATUREN UND APPARATEBAU GmbH, D-65931 Frankfurt (DE)
(72) Erfinder: Frank, Martin, Dr., W-6384 Schmitten 3 (DE)
(74) Vertreter: Nix, Frank Arnold, Dr.

(57) **Zusammenfassung**

Die Vorrichtung zur Entnahme von Proben aus einem Behälter oder dergl. besteht im wesentlichen aus einem Gehäuse 1, durch das ein senkrechter Verbindungskanal 3 zwischen einem unten angeordneten Probengefäß 2 und einem oben angeordneten Ansauggefäß 4 verläuft. In den die genannte Verbindung sammelraumfrei herstellenden Kanal 3 mündet totraumfrei der Ventilsitz 6 eines Unterdruck-Absperrventils 5 und der Ventilsitz 14 eines Tauchrohrabsperrventils 11. Nach Erzeugung eines Unterdrucks durch kurzzeitiges Öffnen des Unterdruck-Absperrventils wird die gewünschte Probe durch ein Tauchrohr hochgesaugt, welches in den Behälter abgesenkt ist und Verbindung mit dem Tauchrohr-Absperrventil 11 hat. Nach Beendigung des Probenziehens entleeren sich alle Strömungsräume und -kanäle restlos und können von einem flüssigen oder gasförmigen Spülmedium durchströmt werden.

## Beschreibung

Die vorliegende Erfindung bezieht sich auf eine Vorrichtung zur Entnahme von Proben flüssiger, pastöser oder fließfähiger Substanzen aus Behältern, Kesseln, Tanks, Reaktoren oder ähnlichen Behältnissen. Eine bekannte Technik der Probenentnahme ist es, ein Tauchrohr in ein solches Behältnis abzusenken und die gewünschte Probe mittels Unterdruck in ein Probengefäß hochzusaugen.

Bei einer bekannten Vorrichtung dieser Art bleibt die am oberen Ende des Probengefäßes angeschlossene Unterdruckquelle auch während des Ziehens der Probe angeschlossen. Das Probengefäß enthält eine Hohlkugel, die auf dem steigenden Spiegel der Probensubstanz nach oben getragen wird und sich schließlich absperrend vor die in der Deckelmitte mündende Unterdruckleitung legt und diese absperrt. Abgesehen von der Gefahr, daß dennoch Probensubstanz in die Unterdruckquelle gelangen kann, ist bei dieser Ausbildung trotz teilweiser Verwendung von totraumarmen Kugelhähnen keine Gewähr für eine rückstandsfreie Entleerung der Vorrichtung nach beendeter Probenentnahme gegeben. Die Vielzahl von Hähnen und Armaturen in den vorhandenen Strömungskanälen macht auch diese, wie andere bekannte Vorrichtungen, anfällig für das Problem des Verstopfens und Verklebens durch viskose oder kristalline Substanzen.

Als Stand der Technik, von dem die vorliegende Erfindung ausgeht, wird vorausgesetzt eine Vorrichtung zur Entnahme von Proben aus Behältern mittels eines in diese absenkbaren Tauchrohrs, welches eine absperrbare Verbindung zu einem Probengefäß sowie einem über diesem angeordneten Ansauggefäß hat, welche gemeinsam an eine Unterdruckquelle anschließbar sind.

Bei dieser Ausbildung ist die Gefahr beseitigt, daß Probensubstanz in die Unterdruckquelle gelangt, weil im Evakuierungsgefäß ein erforderlicher Vorrat an Unterdruck gespeichert werden und die Quelle während des anschließenden Ziehens der Probe abgetrennt sein kann. Aber auch hier ist eine Vielzahl von in Rohrleitungen eingebauten Ventilen vorhanden, die zum Absetzen von Resten, Verkleben und Verstopfungen neigen und erheblicher Reinigungsarbeit bedürfen. Überdies ist die Ausbildung wegen der über Leitungen zusammengefügten Komponenten der Anlage konstruktiv aufwendig und voluminös.

Aufgabe der vorliegenden Erfindung ist die Schaffung einer verbesserten Probenentnahmevorrichtung. Diese soll einfach und von kompakter Bauweise sein und vor allem die Gefahr des Verstopfens, Verklebens und Eintrocknens von Restsubstanzen weitgehend beseitigen.

Die Lösung der gestellten Aufgabe gelingt durch die in den Patentansprüchen angegebenen Ausbildungen.

Die Erfindung wird nachfolgend durch die Beschreibung eines Ausführungsbeispiels an Hand der beigegebenen Zeichnungen weiter erläutert. Es zeigt:
Fig. 1 eine Draufsicht auf eine Vorrichtung zur Entnahme von Proben aus einem Behälter;
Fig. 2 den Schnitt nach Linie II-II in Fig. 1;
Fig. 3 den Schnitt nach Linie III-III in Fig. 2;
Fig. 4 ein absperrbar angeschlossenes Probengefäß;
Fig. 5 ein über eine absperrbare Abzweigung angeschlossener Probentopf.

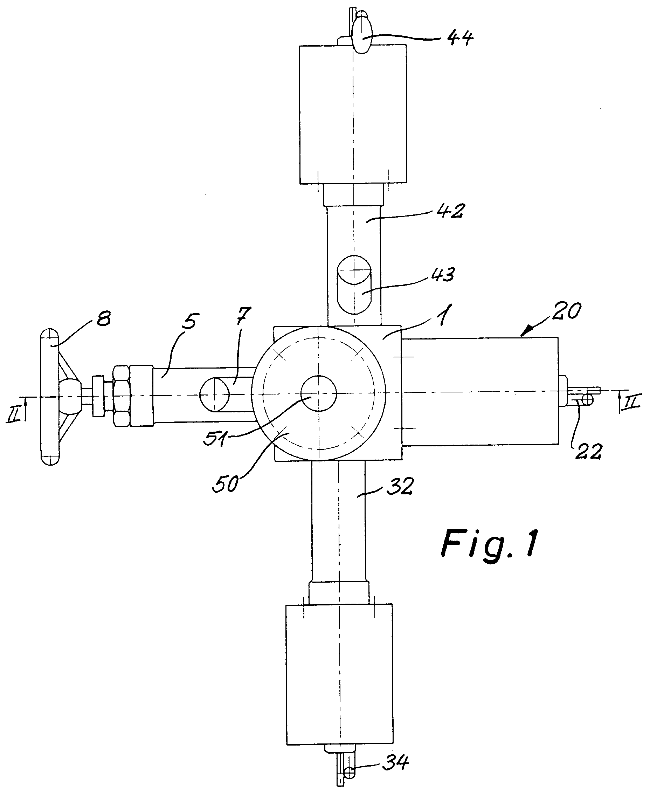

Die beispielsgemäße Probenentnahmevorrichtung gemäß Fig. 1 bis 3 hat ein etwa würfelförmiges Gehäuse 1, in dessen Unterfläche ein Probengefäß 2 befestigt, z.B. eingeschraubt ist. Durch das Gehäuse verläuft ein senkrechter Verbindungskanal 3, welcher das Probengefäß 2 mit einem an der Oberfläche des Gehäuses befestigten Ansauggefäß 4 verbindet.

An einer Seitenfläche des Gehäuses ist ein Unterdruck-Absperrventil 5 eingeschraubt, dessen Ventilsitz 6 in unmittelbarer Nähe des Verbindungskanals 3 liegt, so daß im geschlossenen Zustand des Ventils eine bezüglich des Verbindungskanals 3 praktisch totraumfreie Absperrung zustandekommt. Das Unterdruck-Absperrventil 5 beherrscht einen Stutzen 7, an den eine Unterdruckquelle, z.B. eine Vakuumpumpe, angeschlossen ist. Im betrachteten Ausführungsbeispiel wird das Unterdruck-Absperrventil 5 mittels eines Handrades 8 betätigt.

In der gegenüberliegenden Seitenfläche des Gehäuses 1 sitzt in einer Ausnehmung desselben ein Gehäuseeinsatz 10, der zu einem Wechselventil 11 gehört. Dessen Ventilelement 12 hat einen vorderen Kegelstumpfabschnitt, der mit einem Ventilsitz 14 zusammenwirkt und ein Tauchrohr-Absperrventil bildet. Auch dieser Ventilsitz 14 befindet sich in unmittelbarer Nähe des Verbindungskanals 3, so daß dieser bei dichtendem Sitz des Wechselventilelements 12 auf dem Ventilsitz 14 totraumfrei von dem Wechselventilraum 16 abgetrennt ist, welcher das Wechselventilelement 12 umgibt und durch den dieses sich bei seinen Umschalthüben bewegt.

Zum Wechselventilantrieb 20 gehört ein an der betrachteten Seitenfläche des Gehäuses befestigter, z.B. mit dem Gehäuseeinsatz 10 starr verbundender Rahmen 21, an dem ein Betätigungshebel 22 angelenkt ist, welcher auf eine das Wechselventilelement 12 tragende und betätigende Stange 23 wirkt. Diese Stange 23 ist gestuft und am durch die Abstufung gebildeten Absatz liegt eine Druckplatte 24 an, welche ihrerseits durch eine Feder 25 beaufschlagt ist, welche das Wechselventilelement 12 in seine vordere Stellung drückt, in der es den Sitz 14 sperrt.

In den Wechselventilraum 16 mündet ein Tauchrohranschluß 30. Dieser hat Verbindung mit einem nicht dargestellten Tauchrohr, das in den ebenfalls nicht dargestellten Behälter abgesenkt wird, dem eine Probe fließ- bzw. schüttfähigen oder pastösen Gutes zu entnehmen und in das Probengefäß 2 zu verbringen ist.

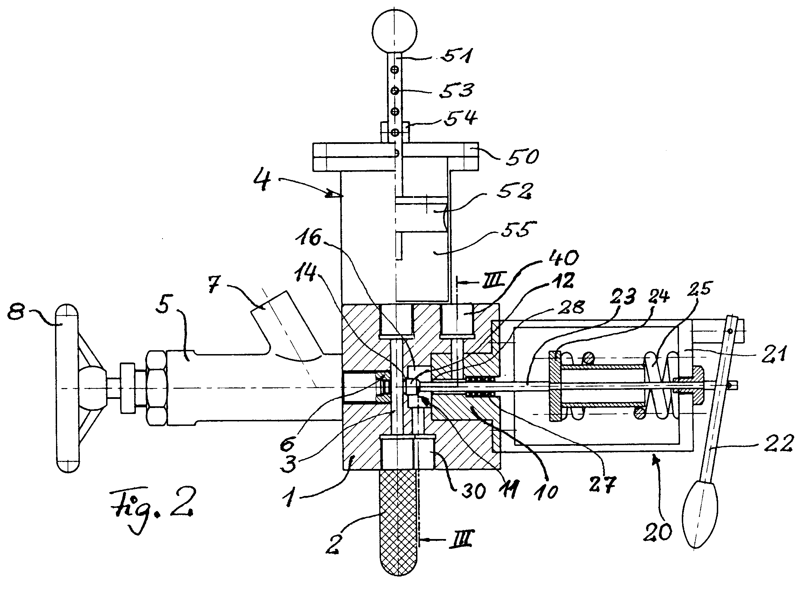

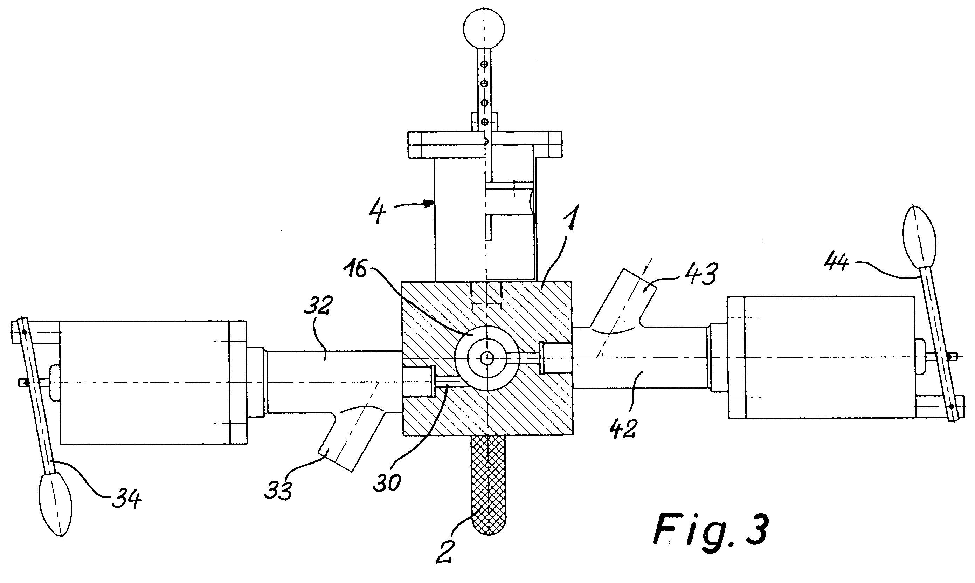

Der Tauchrohranschluß 30, der in Fig. 2 zur Einsparung von Zeichnungsaufwand in die dortige Schnittebene verlegt ist und bei Betrachtung dieser Zeichnung um 90° nach hinten versetzt zu denken ist, verläuft, wie in Fig. 3 gezeigt, waagerecht im Gehäuse 1 zu einer der Seitenwände, die rechtwinklig zu den Seitenwänden von Unterdruckabsperrventil 5 und Wechselventil 11 liegt.

Der Tauchrohranschluß 30 mündet zur tiefsten Stelle des Wechselventilraums 16; vorliegend ist dieser zylinderförmig und die den Tauchrohranschluß 30 darstellende Gehäusebohrung mündet, wie in Fig. 3 ersichtlich, tangential in die unterste Mantellinie des Wechselventilraums 16.

Am anderen äußeren Ende der Tauchrohranschlußbohrung ist ein Tauchrohrzusatzventil 32 angeordnet, z.B. in das Gehäuse 1 eingeschraubt. Dieses hat zum Anschluß des Tauchrohrs einen Stutzen 33 und erlaubt eine zusätzliche Absperrung des Tauchrohrs von seinem Anschluß 30 im Gehäuse 1. Ein solches Tauchrohr-Zusatzventil kann bei erhöhten Anforderungen an die Abtrennbarkeit und Isolierbarkeit der Entnahmevorrichtung von dem die Probensubstanz enthaltenden Behälter erforderlich sein. Im gezeigten Beispiel ist der Antrieb dieses Tauchrohr-Zusatzventils 32 von ähnlicher Bauart wie der Antrieb des Tauchrohr-Absperrventils 11 und wird mittels eines Hebels 34 betätigt.

In der verbleibenden, dem Tauchrohranschluß gegenüberliegenden Seitenwand ist ein Spülanschluß 40 ausgeführt. Auch dieser Anschluß ist, wiederum zur Vermeidung von Zeichnungsaufwand, in Fig. 2 in die dortige Schnittebene verlegt und bei Betrachtung dieser Zeichnung um 90° nach vorn versetzt zu denken. Er verläuft, wie in Fig. 3 gezeigt, waagerecht in der genannten Seitenwand.

Die seitliche Lage des Spülanschlusses 40 ist - dies ist wiederum aus Fig. 2 zu ersehen - derart, daß er zum Teil auch durch den Gehäuseeinsatz 10 verläuft und in dessen Bohrung mündet, durch welche die Stange 23 des Wechselventils 11 verläuft. Dabei befindet sich die Mündung unmittelbar neben einer Stopfbuchse 27, welche den Durchtritt der Stange 23 durch den Gehäuseeinsatz 10 abdichtet.

Die verbleibende Lange der Gehäuseeinsatzbohrung umgibt die Stange 23 mit einem ringkanalförmigen Spalt und bildet an ihrem inneren, in den Wechselventilraum 16 mündenden Ende einen rückwärtigen Ventilsitz 28, der mit einer rückwärtigen Kegelstumpffläche des Wechselventilelements 12 zusammenwirkt.

An den Spülanschluß 40 ist ein Spülventil 42 ähnlicher, mittels eines Hebels 44 zu betätigender Bauart angeschlossen, wobei das Spülmedium über einen Spülstutzen 43 zugeführt wird.

Das Ansauggefäß 4 ist ein Zylinder, in dessen Deckel 50 die Stange 51 eines Kolbens 52 geführt ist. Die Höhenstellung des Kolbens 52 ist dadurch einstell- und arretierbar, daß die Kolbenstange 51 Querbohrungen 53 aufweist, die mit einer Querbohrung in einem Kragen 54 des Deckels 50 in fluchtende Übereinstimmung gebracht und mittels eines durchsteckbaren Arretierbolzens festgelegt werden kann. Auf diese Weise ist das Saugvolumen 55 des Ansauggefäßes 4 veränderlich.

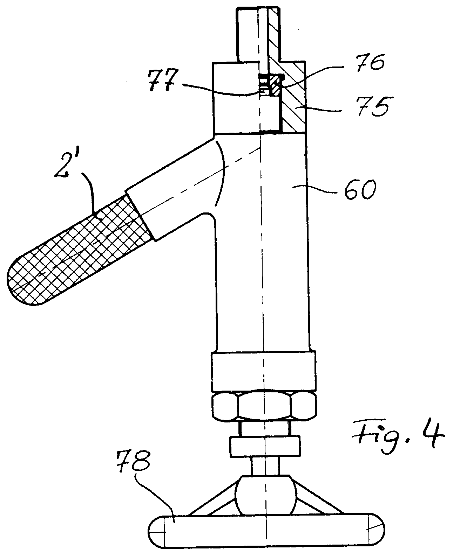

Bei erhöhten Anforderungen an die Abtrenn- und Isolierbarkeit der entnommenen Proben ist gemäß Fig. 4 zwischen dem Gehäuse 1 und dem Probengefäß 2' eine Absperrmöglichkeit vorgesehen. Ein Probengefäßventil 60 ist an einem Probenzwischengefäß 75 befestigt, welches seinerseits anstelle des Probengefäßes 2 in die Unterfläche des Gehäuses 1 einschraubbar ist. Das Probenzwischengefäß 75 nimmt den Ventilsitz 76 auf, der mit dem Ventilschließkörper 77 zusammenwirkt, welcher mittels des Handrades 78 bewegt wird. Der im geschlossenen Zustand oberhalb des Ventilschließkörpers 77 im Probenzwischengefäß 75 verbleibende Raum wirkt als Sammelraum einer bestimmten Größe für die zu entnehmende Probe.

Das Probengefäß 2' ist schräg nach unten geneigt am Probengefäßventil 60 angeschlossen und die Durchtrittsräume und -kanäle sind sämtlich so ausgebildet, daß sie zum Probengefäß 2' geneigt sind. Damit wird erreicht, daß bei der Füllung des Probengefäßes 2' sich an keiner Stelle Probensubstanz ansammeln und zurückbleiben kann, sondern sich alle Strömungskanäle restlos in das Probengefäß entleeren. Diese sammelraumfreie Ausbildung aller Armaturen gewährleistet ein restloses Abfließen der Probensubstanzen aus allen Bereichen der Entnahmevorrichtung.

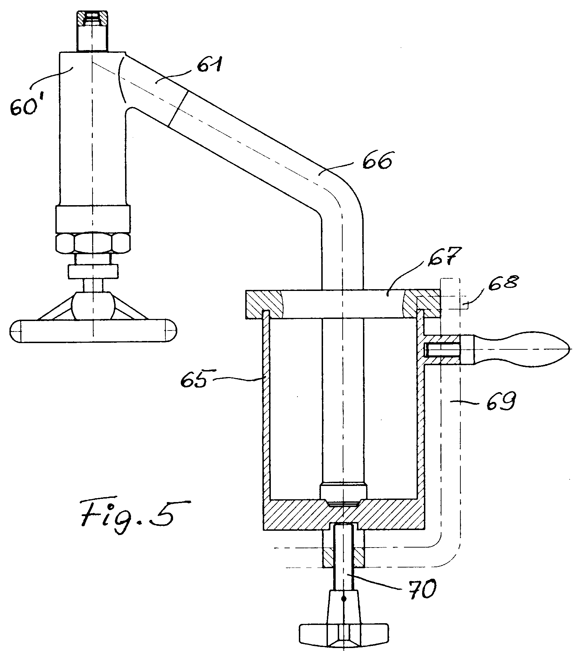

Ein ähnliches Probengefäßventil 60' kann gemaß Fig. 5 Anwendung finden mit einem zur Entnahme der Probe bestimmten Topf 65. Bei dieser Ausbildung geht ein Stutzen 61 des Probengefäßventils 60' über in eine Probenabzweigleitung 66, an deren senkrechtem Endabschnitt ein Flansch 67 dicht befestigt ist. An seitlichen Stiften 68 sind die Schenkel eines Bügels 69 angehängt oder schwenkbar angelenkt, in dessen waagerechtem Jochabschnitt eine Anpreßschraube 70 eingeschraubt ist. Diese drückt von unten gegen den Boden des Probentopfs 65, wodurch dessen oberer Rand gegen die Unterfläche des Flanschs 67 und gleichzeitig das untere Ende der Probenabzweigleitung 66 im Inneren des Topfes 65 gegen dessen Boden gedrückt ist. Beim Lösen der Anpreßschraube 70 werden beide dichtenden Verbindungen aufgehoben und der Topf 65 kann sich füllen. Auch diese Ausbildung gewährleistet die Entnahme einer volumenmäßig genau definierten Probe.

Das Entnehmen einer Probe mittels der beschriebenen Vorrichtung geschieht wie folgt:
Das am Behälter, dem eine Probe zu entnehmen ist, befestigte und in diesen eintauchende Tauchrohr wird mit dem Tauchrohranschlußstutzen 33 in Verbindung gebracht. Durch Höhenverstellung und Arretierung des Kolbens 52 wird das Saugvolumen 55 auf einen Wert eingestellt, welcher gewährleistet, daß sich das Probengefäß 2 vollständig oder bis zu einem gewünschten Füllstand füllen wird. Das in Abhängigkeit von den übrigen Einflußgrößen erforderliche Saugvolumen kann experimentell ermittelt werden. Alle Ventile sind zunächst geschlossen.

Die erste Operation ist das Öffnen des Unterdruckabsperrventils 5, so daß das Saugvolumen 55 des Ansauggefäßes 4, das Probengefäß 2 und der sie verbindende Kanal 3 evakuiert werden, bis in ihnen ein Unterdruck von beispielsweise 5 mbar herrscht. Danach wird das Unterdruck-Absperrventil 5 wieder geschlossen.

Zur eigentlichen Probenentnahme wird durch Schwenken des Betätigungshebels 22 das Wechselventil 11 in seine Umschaltstellung verbracht, in der sein Ventilelement 12 zur dichtenden Anlage am rückwärtigen Ventilsitz 28 kommt. Außerdem wird das in der betrachteten Ausbildung vorhandene Tauchrohr-Zusatzventil 32 durch Betätigung des Hebels 34 geöffnet, so daß der aufgebaute Unterdruck im Tauchrohranschlußstutzen 33 wirksam wird und beginnt, die Probensubstanz aus dem Behälter anzusaugen. Die Substanz fließt durch den Tauchrohranschluß 30, den Wechselventilraum 16 und die untere Hälfte des Verbindungskanals 3 in das Probengefäß 2. Der in diesem anfänglich herrschende und sich am Ansaugen beteiligende Unterdruck wird dabei zunehmend wirkungslos und das restliche Ansaugen bis zur gewünschten Füllung des Probengefäßes 2 geschieht durch den gespeicherten Unterdruck im Saugvolumen 55.

Wenn nach gewünschter Füllung des Probengefäßes die herrschenden Drücke sich ausgleichen und das Überströmen zu Ende geht, fließt die Restmenge der Probensubstanz zurück, wobei sich wegen der sammelraumfreien Konstruktion der Vorrichtung, vorliegend der tangentialen Mündung des Tauchrohranschlusses 30 in den Wechselventilraum 16, auch dieser restlos entleert.

Durch Freigabe des Betätigungshebels 22 wird der Wechselventilraum 16 wieder vom Verbindungskanal 3 abgetrennt und das Probengefäß 2 kann vom Gehäuse gelöst und die Probe entnommen werden.

Ein Spülen des Gehäuses 1 und des Tauchrohrs geschieht durch Öffnen des Spülventils 42 bei offen gehaltenem oder wieder geöffnetem Tauchrohrzusatzventil 32. Das Spülmedium, z.B. ein inertes Gas oder eine Spülflüssigkeit, insbesondere ein Lösungsmittel, tritt über den Spülstutzen 43 und den Spülanschluß 40 ein und umspült die gesamte Erstreckung der Stange 23 auf deren Abschnitt vor der Stopfbuchse 27. Weiterhin wird der Wechselventilraum 16, das Tauchrohrzusatzventil 32 und das Tauchrohr selbst durchgespült. Es versteht sich, daß eine solche Spülung, z.B. mit Stickstoff, auch vor der ersten Probennahme durchgeführt werden kann, um eine unverfälschte und frische Probe zu garantieren.

Bei Bedarf ist auch ein Spülen des Verbindungskanals 3 möglich, wenn das Wechselventilelement 12 in eine Zwischenstellung zwischen seinen beiden Ventilsitzen verbracht wird.

Soweit gemäß Fig. 4 ein zusätzliches Probengefäßventil 60 zwischen dem Gehäuse 1 und dem Probengefäß 2' vorgesehen ist, geschieht das beschriebene Ziehen einer Probe bei geschlossenem Probengefäßventil. Dabei füllt sich der oberhalb des Ventilschließkörpers 77 und Ventilsitzes 76 gelegene Raum des Probenzwischengefäßes 75. Nach Beendigung dieses Vorgangs wird mittels des Handrades 78 das Probengefäßventil 60 geöffnet und die Probe fließt restlos in das Probengefäß 2'. Die Handhabung der Ausbildung gemäß Fig. 5 verläuft ähnlich.

Es versteht sich, daß die in der beispielsgemäßen Ausbildung gezeigten manuellen Betätigungsantriebe der Ventile ersetzt sein können durch Servoantriebe einer geeigneten Bauart und diese dabei nach einem Programm gesteuert werden können, um eine oder eine Mehrzahl von aufeinanderfolgenden Probeentnahmen automatisch ablaufen zu lassen. Die Ventile können auch eingerichtet werden zur Betätigung in einer Totmannschaltung oder mit Schlüsselsystemen, so daß Fehlbedienungen ausgeschlossen werden.

Auch für die verschiedenen Abdichtungen können verschiedene Ausbildungen zweckmäßig sein. Anstelle der Stopfbuchse 27 kann beispielsweise die Stange 23 mittels eines Federbalgs abgedichtet werden.

| Bezugszeichenliste | | | |
|---|---|---|---|
| 1 | Gehäuse | 32 | Tauchrohr-Zusatzventil |
| 2 | Probengefäß | 33 | Tauchrohranschlußstutzen |
| 2' | Probengefäß | 34 | Betätigungshebel |
| 3 | Verbindungskanal | 40 | Spülanschluß |
| 4 | Ansauggefäß | 42 | Spülventil |
| 5 | Unterdruck-Absperrventil | 43 | Spülstutzen |
| 6 | Ventilsitz | 44 | Betätigungshebel |
| 7 | Stutzen | 50 | Deckel |
| 8 | Handrad | 51 | Kolbenstange |
| 10 | Gehäuseeinsatz | 52 | Kolben |
| 11 | Wechselventil | 53 | Querbohrung |
| 12 | Wechselventilelement | 54 | Kragen |
| 14 | Ventilsitz | 55 | Saugvolumen |
| 16 | Wechselventilraum | 60 | Probengefäßventil |
| 20 | Wechselventilantrieb | 60' | Probengefäßventil |
| 21 | Rahmen | 61 | Stutzen |
| 22 | Betätigungshebel | 65 | Probentopf |
| 23 | Stange | 66 | Probenabzweigleitung |
| 24 | Druckplatte | 67 | Flansch |
| 25 | Feder | 68 | Stift |
| 27 | Stopfbuchse | 69 | Bügel |
| 28 | rückwärtiger Ventilsitz | 70 | Anpreßschraube |
| 30 | Tauchrohranschluß | 75 | Probenzwischengefäß |
| | | 76 | Ventilsitz |
| | | 77 | Ventilschließkörper |
| | | 78 | Handrad |

## Patentansprüche

1. Vorrichtung zur Entnahme von Proben aus Behältern mittels eines in diese absenkbaren Tauchrohrs, welches eine absperrbare Verbindung zu einem Probengefäß (2) sowie einem über diesem angeordneten Ansauggefäß (4) hat, welche gemeinsam an eine Unterdruckquelle anschließbar sind,
gekennzeichnet durch ein Gehäuse (1), durch welches ein das Probengefäß (2) und das Ansauggefäß (4) verbindender Kanal (3) verläuft,
in dessen Verlauf der Ventilsitz (6) des Unterdruck-Absperrventils (5) und der Ventilsitz (14) des Tauchrohr-Absperrventils (11) totraumfrei münden.

2. Vorrichtung nach Anspruch 1, dadurch gekennzeichnet, daß das Tauchrohrabsperrventil als Wechselventil (11) ausgebildet ist, dessen rückwärtiger Ventilsitz (28) einen Spülanschluß (40) beherrscht.

3. Vorrichtung nach Anspruch 1 und/oder 2, dadurch gekennzeichnet, daß der Tauchrohranschluß (30) an der tiefsten Stelle des Raums (16) des Tauchrohrabsperrventils (11) mündet.

4. Vorrichtung nach einem oder mehreren der vorhergehenden Ansprüche, dadurch gekennzeichnet, daß der den Spülanschluß (40) beherrschende rückwärtige Ventilsitz (28) an der Stirnfläche eines Gehäuseeinsatzes (10) ausgebildet ist.

5. Vorrichtung nach einem oder mehreren der vorhergehenden Ansprüche, dadurch gekennzeichnet, daß die Mündung des Spülanschlusses (40) im Gehäuseeinsatz (10) so liegt, daß die Stange (23) des Wechselventils (11) auf ihrer gesamten zum Wechselventilraum (16) gehörenden Erstreckung bespült wird.

6. Vorrichtung nach einem oder mehreren der vorhergehenden Ansprüche, dadurch gekennzeichnet, daß das Wechselventil (11) ein Ventilelement (12) in Form eines Doppelkegelstumpfs aufweist, welches unter der Wirkung einer Feder (25) steht, die die vordere Kegelstumpffläche an den Tauchrohrabsperrventilsitz (14) drückt.

7. Vorrichtung nach einem oder mehreren der vorhergehenden Ansprüche, dadurch gekennzeichnet, daß das wirksame Saugvolumen (55) des Ansauggefäßes (4) einstellbar ist.

8. Vorrichtung nach Anspruch 7, dadurch gekennzeichnet, daß das Ansauggefäß (4) einen verschieblichen Kolben (52) enthält, welcher in verschiedenen Stellungen arretierbar ist.

9. Vorrichtung nach einem oder mehreren der vorhergehenden Ansprüche, dadurch gekennzeichnet, daß alle im Gehäuse (1) ausgeführten Räume und Kanäle zwischen Probengefäß (2), Ansauggefäß (4) und Tauchrohranschluß (30) totraumfrei ausgebildet sind.

10. Vorrichtung nach einem oder mehreren der vorhergehenden Ansprüche, dadurch gekennzeichnet, daß der Verbindungskanal (3) zwischen Probengefäß (2) und Ansauggefäß (4) senkrecht durch das Gehäuse (1) verläuft.

11. Vorrichtung nach einem oder mehreren der vorhergehenden Ansprüche, dadurch gekennzeichnet, daß der Tauchrohranschluß (30) des Gehäuses (1) mit dem Tauchrohr über ein sammelraumfreies Tauchrohr-Zusatzventil (32) verbunden ist.

12. Vorrichtung nach einem oder mehreren der vorhergehenden Ansprüche, dadurch gekennzeichnet, daß das Probengefäß (2') über ein Probengefäßventil (60) und ein Probenzwischengefäß (75) an das Gehäuse (1) angeschlossen ist und diese in ihrer Zusammenwirkung eine sammelraumfreie Verbindung zwischen dem Probengefäß (2') und dem Verbindungskanal (3) herstellen.

13. Vorrichtung nach einem oder mehreren der vorhergehenden Ansprüche, dadurch gekennzeichnet, daß das Probengefäß über ein Probengefäßventil (60') an das Gehäuse angeschlossen ist und an das Probengefäßventil eine Probenabzweigleitung (66) anschließt, an der ein Probentopf (65) abgedichtet festspannbar ist.
